# EUROPEAN PATENT APPLICATION

(11) **EP 2 609 987 A1**
(43) Date of publication of application: **03.07.2013**
(21) Application number: 11812421.3
(22) Date of filing: 25.07.2011
(51) Int. Cl.: B01D 53/62, B01D 53/50, B01D 53/77

(54) **DISCHARGE GAS TREATMENT SYSTEM HAVING CO2 REMOVAL EQUIPMENT.**

(30) Priority: 26.07.2010 JP 2010167051
(71) Applicant: Babcock-Hitachi Kabushiki Kaisha, Chiyoda-ku Tokyo 101-0021 (JP)
(72) Inventor: MORI Shogo, Kure-shi Hiroshima 737-0029 (JP); NAKAMOTO Takanori, Kure-shi Hiroshima 737-0029 (JP); ODA Naoki, Kure-shi Hiroshima 737-0029 (JP); KATSUBE Toshio, Kure-shi Hiroshima 737-0029 (JP)
(74) Representative: Jenkins, Peter David
(86) International application number: PCT/JP2011/066813
(87) International publication number: WO 2012/014831

(57) **Abstract**

An object of the present invention is to provide a CO₂ removal equipment for removing CO₂ in a combustion exhaust gas and a method therefore, which can reduce environmental burdens during operation of the CO₂ removal equipment, and which can minimize the installation cost of a prescrubber and utility costs. Provided is an exhaust gas treatment system with a CO₂ removal equipment for absorbing and removing carbon dioxide (CO₂) in a combustion exhaust gas using an absorbing solution of an amine compound, the system comprising a prescrubber for bringing the exhaust gas into contact with seawater, the prescrubber being disposed on the upstream side of the CO₂ removal equipment.

## Description

### TECHNICAL FIELD

The present invention relates to an exhaust gas treatment system that removes carbon dioxide (CO₂) in a combustion exhaust gas by a chemical absorption method, and particularly to an exhaust gas treatment system comprising an equipment for removing CO₂ from a combustion exhaust gas using an amine compound aqueous solution as a CO₂ absorbent.

### BACKGROUND ART

Recently, large amounts of fossil fuel, heavy oil, and the like are used as fuel in thermal power equipments and boiler equipments. In terms of preventing air pollution and global warming, studies on the reduction of CO₂ emission into the atmosphere have been globally advanced. As a technique for separating and recovering CO₂ from exhaust gases of thermal power equipments, chemical plants, and the like, which are large sources of CO₂, a chemical absorption method that uses an aqueous solution of amine, such as alkanolamine, as a CO₂ absorbing solution is widely known.

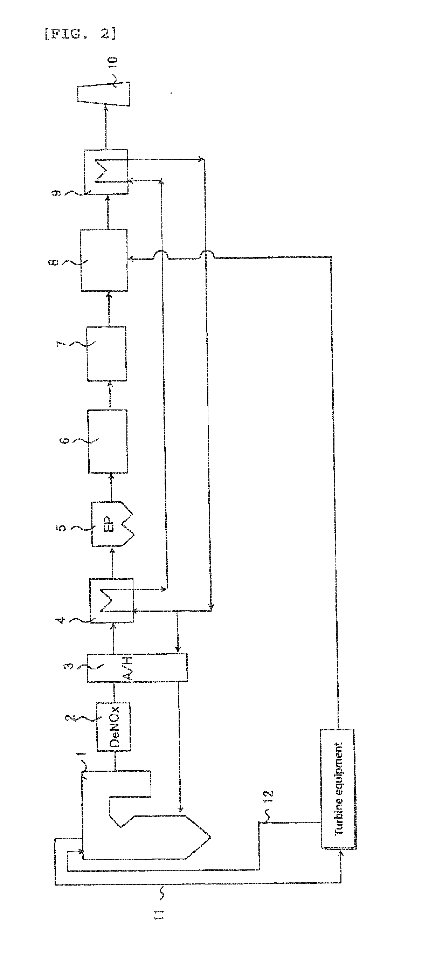

Fig. 2 shows an example of a conventional power generation plant including a CO₂ removal equipment. This power generation plant mainly comprises a boiler 1, a denitration device 2, an air heater 3, a GGH (heat recovery device) 4, an electric precipitator 5, a wet-type desulfurization device 6, a prescrubber 7, a CO₂ removal equipment 8, and a GGH (reheater) 9. The boiler 1 is provided with a turbine equipment, and boiler steam 11 is supplied to the turbine equipment. The turbine rotates to thereby rotate the connected generator, generating electricity. The steam working in the turbine is cooled to feed water 12, which is supplied again to the boiler 1. The boiler 1 burns coal and the like, thereby generating an exhaust gas. The denitration device 2 decomposes nitrogen oxide (NOx) contained in the gas discharged from the boiler 1. Thereafter, the temperature of the gas discharged from the denitration device 2 is adjusted to 130 deg C to 150 deg C by the air heater 3. The GGH heat recovery device 4 recovers the heat of the exhaust gas, and then the electric precipitator 5 removes smoke dust. The decontaminated gas is fed to the wet-type desulfurization device 6, and sulfur dioxide (SO₂) is removed. The prescrubber 7 performs more highly efficient desulfurization so that the SO₂ concentration in the gas is reduced to several ppm or less. The exhaust gas of the outlet of the prescrubber 7 is fed to the CO₂ removal equipment 8, and CO₂ is absorbed and removed. Thereafter, the exhaust gas is heated to 80 deg C to 90 deg C by the GGH reheater 9, and then released from a chimney 10 into the atmosphere.

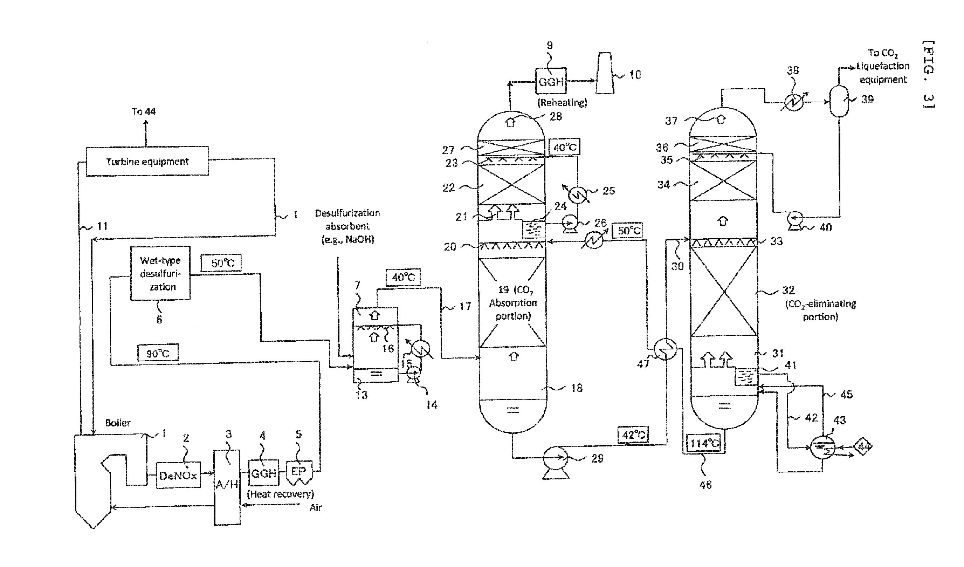

Fig. 3 shows an example of a detailed configuration of the conventional power generation plant shown in Fig. 2. The prescrubber 7 comprises a water tank for accommodating an absorbent 13 to be fed into the system, a circulation pump 14 for circulating the absorbent, a cooler 15 for cooling the circulating absorbent, and a spray portion 16 for spraying the absorbent so that the absorbent is brought into countercurrent contact with the exhaust gas in the scrubber. The outlet exhaust gas of the wet-type desulfurization device 6 fed to the prescrubber 7 contains about 40 ppm to 80 ppm of SO₂; however, SO₂, which is a factor of degradation of the amine absorbing solution, is removed by the prescrubber 7 (about 1 ppm to several ppm in the prescrubber outlet), while the gas is cooled by the absorbent and then introduced into an absorption column 18 as a prescrubber outlet gas 17.
In the absorption column 18, CO₂ is absorbed by an amine absorbing solution by means of a packed bed 19 in which the reaction of absorption of CO₂ in the exhaust gas by the amine absorbing solution occurs, and an absorbing solution spray portion 20 for spraying the absorbing solution. In this case, in order to cool and water-wash the eliminated CO₂ exhaust gas 21, whose temperature is raised by the exoergic reaction of absorbing CO₂, a water washing portion 22 and a water washing spray portion 23 for washing and removing the amine absorbing solution accompanying the eliminated CO₂ exhaust gas 21, a wash water storing portion 24 for storing the wash water, a cooler 25 for cooling the circulating wash water, and a water washing pump 26 for circulating the wash water are provided. Further, a demister 27 is provided in the top of the water washing portion so as to remove mist of the absorbing solution passing through the water washing portion. The treated gas 28 discharged from the absorption column outlet is heated to 80 deg C to 90 deg C by a GGH reheater 9 and discharged from a chimney 10. Moreover, the amine solution that absorbed CO₂ is transferred to a regeneration column 31 from the solution storage in the bottom of the absorption column 18 by an absorption column extract pump 29 while passing through a regeneration column solution feed piping 30. Then, in the top of a packed bed 32 disposed in the middle of the regeneration column 31, the absorbing solution sprayed from a spray portion 33 is brought into gas-liquid contact with steam rising from the bottom, and thereby CO₂ contained in the absorbing solution is degassed. Subsequently, the degassed CO₂ gas is washed by a water washing portion 34 and a water washing spray 35, and mist passing through the water washing portion along with the gas is collected by a demister 36 and discharged as a CO₂ gas 37 from the top of the regeneration column. The CO₂ gas 37 is cooled to 40 deg C by a cooler 38, and then separated into a gas and condensed water by a CO₂ separator 39. The separated CO₂ gas is introduced into a CO₂ liquefaction equipment, which is not shown. Further, the condensed water is fed to the water washing spray 35 by a drain pump 40. On the other hand, the CO₂-degassed amine solution is stored in a regeneration column solution storing portion 41, and then transferred to a reboiler 43 passing through a reboiler solution feed piping 42. The reboiler 43 is provided with a heat transfer tube or the like therein. The amine solution is indirectly heated by steam 44 fed by a steam feed piping, and thereby a vapor from the reboiler passes through a vapor feed piping 45 and is fed to a regeneration column. In addition, from the solution storage in the bottom of the regeneration column, the amine absorbing solution passes through a regeneration column solution extract piping 46, is cooled by a heat exchanger 47, and is introduced into an absorption column.

In the conventional technique, the outlet gas temperature of the wet-type desulfurization device 6 was 50 deg C. In order to maintain CO₂ removal performance, it was necessary to reduce the gas temperature of the inlet of the CO₂ absorption column to about 40 deg C in the above-mentioned prescrubber 7, for which a cooler for the absorbent was required. Furthermore, in order to perform desulfurization with high efficiency, it was necessary to use high-cost basic agents, such as sodium hydroxide (NaOH). Challenge was to reduce utility costs, including installation of a cooling system for cooling the exhaust gas and the accompanying increase in the amount of desulfurization effluent to be treated, as well as the cost of the prescrubber.

### SUMMARY OF THE INVENTION

### PROBLEMS TO BE RESOLVED BY THE INVENTION

In the above conventional technique, it was necessary to use a basic agent (for example, sodium hydroxide) as the desulfurization absorbent in the prescrubber of the CO₂ removal equipment, and the increased cost was problematic. Moreover, since the amount of desulfurization effluent was increased by the prescrubber, there was a problem of increased utility costs associated with effluent treatment. Furthermore, in order to maintain the efficiency of the CO₂ removal equipment, it was necessary to cool the exhaust gas (for example, from 50 deg. C to 40 deg. C or lower) in the prescrubber; however, this cooling system required the use of a large amount of cooling water.
An object of the present invention is to provide a CO₂ removal treatment system for removing CO₂ in a combustion exhaust gas, which can reduce environmental burdens during operation of the CO₂ removal equipment, and which can minimize the installation cost of a prescrubber and utility costs.

### MEANS FOR SOLVING THE PROBLEMS

The above object can be achieved by using seawater as the desulfurization absorbent in the prescrubber of the CO₂ removal equipment for absorbing and removing CO₂ in a combustion exhaust gas. That is, inventions to be claimed in the present application are as follows.
(1) An exhaust gas treatment system with a CO₂ removal equipment for absorbing and removing carbon dioxide (CO₂) in a combustion exhaust gas using an absorbing solution of an amine compound, the system comprising a prescrubber for bringing the exhaust gas into contact with seawater, the prescrubber being disposed on the upstream side of the CO₂ removal equipment.
(2) The exhaust gas treatment system according to (1), wherein the exhaust gas treatment system comprises a wet-type exhaust gas desulfurization device, and the prescrubber is disposed downstream the wet-type exhaust gas desulfurization device and has a function of cooling an outlet exhaust gas of the wet-type exhaust gas desulfurization device.
In the present invention, since the use of seawater as the SO₂ absorbent in the prescrubber disposed upstream the CO₂ removal equipment eliminates the need for conventional absorbents, such as NaOH, cost reduction can be achieved. In general seawater desulfurization, the discharge of hazardous substances, such as mercury (Hg), contained in the exhaust gas causes problems; however, in the present invention (claim 2), such hazardous substances are removed by the desulfurization device using a limestone-gypsum process disposed upstream the prescrubber, and secondary pollution is therefore less likely to occur.
Furthermore, the use of a cooling system in the prescrubber can be saved by feeding seawater having the temperature of usually 20 deg C to 30 deg C, to the prescrubber, and installation costs, the amount of cooling water, and utility costs associated therewith can be reduced.

### ADVANTAGEOUS EFFECTS OF THE INVENTION

As described above, according to the present invention, seawater is used in place of the desulfurization absorbent in the prescrubber to pre-treat an exhaust gas to be introduced into the CO₂ removal equipment, thereby saving the use of a cooler and reducing the load of treating the desulfurization effluent, and thus reducing installation costs and utility costs. In addition, since the desulfurization device disposed upstream the prescrubber removes most of the hazardous substances, including mercury, the discharge of the used seawater is less likely to cause secondary pollution.

### BRIEF DESCRIPTION OF THE DRAWINGS

Fig. 1 is an explanatory drawing showing an embodiment in which seawater is used as a prescrubber desulfurization absorbent in a CO₂ removal device system for absorbing and removing CO₂ in a combustion exhaust gas.
Fig. 2 is an explanatory drawing showing a flowchart of a combustion exhaust gas in a conventional system for removing CO₂ in a combustion exhaust gas.
Fig. 3 is a drawing showing an example of a detailed configuration of the conventional CO₂ removal device system shown in Fig. 2.

### EMBODIMENT FOR CARRYING OUT THE INVENTION

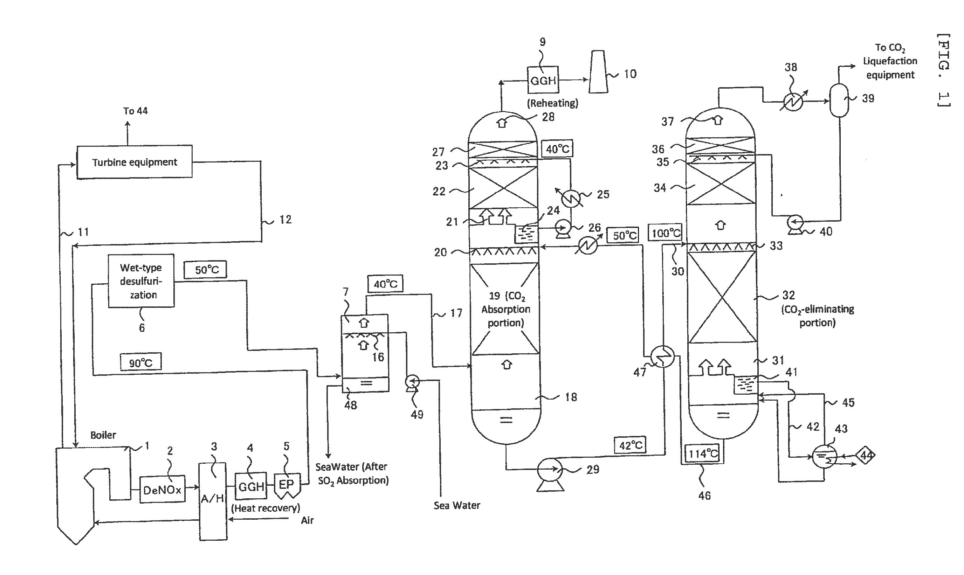

An embodiment of the present invention is described with reference to Fig. 1. The structure of the CO₂ removal equipment in the present invention is the same as that of the conventional equipment shown in Fig. 3, except for a prescrubber 7. More specifically, the prescrubber 7 comprises a seawater feed pump 49 for feeding seawater 48 as an absorbent, and a spray portion 16 for spraying the absorbent so that the absorbent is brought into countercurrent contact with the exhaust gas. The exhaust gas out of a wet-type desulfurization device 6 is fed to the prescrubber 7. In the prescrubber 7, the gas is cooled to about 40 deg C while SO₂ is removed by the seawater 48. The cooled gas is introduced into an absorption column 18 as a prescrubber outlet gas 17. On the other hand, the seawater that absorbed SO₂ is discharged into the sea as it is. The structures of the CO₂ absorption column 18 and a regeneration column 31 are the same as those of the conventional device of Fig. 3, as described above.

### EXPLANATION OF SYMBOLS

1: Boiler 2:Denitration device
3: Air heater 4: GGH (heat recovery device)
5: Electric precipitator 6: Wet-type
desulfurization device 7: Prescrubber
8: CO₂ removal equipment
9: GGH (reheater) 10: Chimney
11: Boiler steam 18: Absorption column
29: Absorption column extract pump
30: Regeneration column solution feed piping
31: Regeneration column 32: Packed bed
33: Spray portion 36: Demister
38: Cooler 39: CO₂ separator
42: Reboiler solution feed piping
43: Reboiler 47: Heat exchanger

## Claims

1. An exhaust gas treatment system with a CO₂ removal equipment for absorbing and removing carbon dioxide (CO₂) in a combustion exhaust gas using an absorbing solution of an amine compound,
the system comprising a prescrubber for bringing the exhaust gas into contact with seawater, in which the prescrubber is disposed on the upstream side of the CO₂ removal equipment.

2. The exhaust gas treatment system according to claim 1, wherein
the exhaust gas treatment system comprises a wet-type exhaust gas desulfurization device, and
the prescrubber is disposed downstream the wet-type exhaust gas desulfurization device and has a function of cooling an outlet exhaust gas of the wet-type exhaust gas desulfurization device.
